# FASCICULE DE BREVET EUROPEEN

(11) **EP 3 134 791 B1**
(45) Date de publication et mention de la délivrance du brevet: **13.09.2023**
(21) Numéro de dépôt: 15716850.1
(22) Date de dépôt: 22.04.2015
(51) Int. Cl.: G08G 5/00, G05D 1/00, G08G 5/06, G05D 1/02

(54) **PROCÉDÉ DE GUIDAGE D'UN AÉRONEF**
VERFAHREN ZUR FÜHRUNG EINES FLUGZEUGS
METHOD FOR GUIDING AN AIRCRAFT

(30) Priorité: 22.04.2014 FR 1453590
(43) Date de publication de la demande: 01.03.2017
(73) Titulaire: Safran Electronics & Defense, 92100 Boulogne-Billancourt (FR)
(72) Inventeur: FARJON, Julien, F-92100 Boulogne-Billancourt (FR); GUETTIER, Christophe, F-92100 Boulogne-Billancourt (FR)
(74) Mandataire: Regimbeau
(86) Numéro de dépôt international: PCT/EP2015/058654
(87) Numéro de publication internationale: WO 2015/162152

(56) Documents cités:
- EP-A1- 2 378 460
- FR-A1- 2 808 588
- FR-A1- 2 911 713
- US-A- 5 172 317
- US-A1- 2013 151 062
- MAGGIE ZHANG AND YIYUAN J ZHAO Q: "Systematic Procedure for Taxi-Route Conformance Monitoring", JOURNAL OF AIRCRAFT, AIAA, RESTON, VA, US, vol. 49, no. 6, 1 novembre 2012 (2012-11-01), pages 1953-1964, XP008171969, ISSN: 0021-8669, DOI: 10.2514/1.C031799

## Description

### DOMAINE TECHNIQUE GENERAL

L'invention concerne le domaine de l'aide au pilotage dans une phase de déplacement au sol d'un aéronef et plus précisément un procédé de guidage autonome amélioré lors d'une phase de roulage.

### ETAT DE LA TECHNIQUE

Lors des phases de roulage au sol d'un aéronef, le pilote de l'aéronef doit conduire celui-ci entre les pistes et les infrastructures aéroportuaires en toute sécurité malgré une visibilité réduite.

Afin d'aider le pilote dans sa tâche, il existe des systèmes de guidage déterminant la position de l'aéronef par rapport à des indicateurs au sol, tels que des marquages réfléchissants, des plots ou des lampes, et utilisant cette information pour guider l'aéronef le long d'une trajectoire de référence suivre, comme la solution préconisée dans le document EP2378460A1.

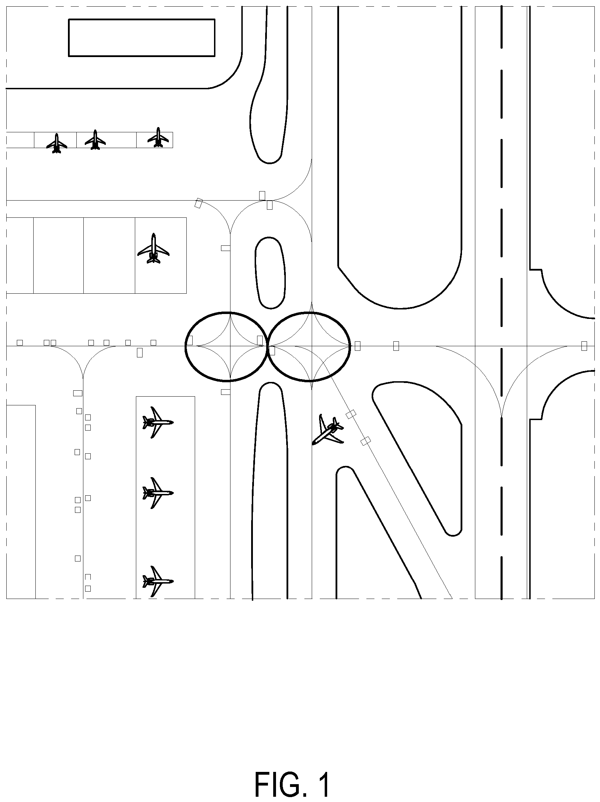

Néanmoins, certaines zones de roulage telles que les zones de croisement peuvent présenter une topologie complexe susceptible d'induire en erreur un système de guidage, comme représenté en figure 1. Celui-ci risque en effet de prendre en compte pour le calcul d'une trajectoire à suivre des indicateurs inadaptés et peut alors guider l'aéronef dans une mauvaise direction. Une telle erreur de trajectoire peut présenter des risques importants de sécurité si l'aéronef est ainsi guidé hors d'une voie de roulage ou bien sur une piste déjà empruntée par un autre appareil.

Il existe donc un besoin d'un procédé supervisant le guidage d'un aéronef afin de le guider correctement sur une plateforme d'un aéroport, même dans des zones de roulage complexes, et limitant l'impact d'une erreur de guidage.

### PRESENTATION DE L'INVENTION

La présente invention se rapporte ainsi selon un premier aspect à un procédé de guidage le long d'une trajectoire de référence sur une plateforme au sol d'un aéronef, tel qu'exposé selon les revendications 1-6 annexées.

Un tel procédé permet de guider l'aéronef sans risquer de lui faire suivre une trajectoire différente de la trajectoire de référence.

L'étape de calcul de l'indice de confiance dudit au moins un indicateur sélectionné du procédé selon le premier aspect peut être réalisée en fonction de la disposition desdits indicateurs au sol par rapport à la trajectoire de référence.

L'étape de calcul de l'indice de confiance relatif à la localisation relative estimée à partir dudit au moins un indicateur sélectionné du procédé selon le premier aspect peut être réalisée en fonction de la position de l'aéronef par rapport audit au moins un indicateur sélectionné et de la trajectoire de référence.

Ceci permet de quantifier la confiance qui peut être accordée à une estimation de localisation de l'aéronef en fonction des positions des indicateurs et de l'aéronef les uns par rapport aux autres et par rapport à la trajectoire que l'aéronef doit suivre.

Selon un deuxième aspect, l'invention concerne un produit programme d'ordinateur comprenant des instructions de code pour l'exécution d'un procédé de guidage, tel qu'exposé dans la revendication 7 annexée.

Selon un troisième aspect, l'invention concerne un module de traitement de données susceptible d'être connecté à au moins un détecteur d'une pluralité d'indicateurs localisés sur une plateforme au sol, ledit au moins un détecteur étant embarqué sur un aéronef et ledit module de traitement de données étant configuré tel qu'exposé dans la revendication 8 annexée.

Selon un quatrième aspect, l'invention concerne un système de guidage d'un aéronef le long d'une trajectoire de référence sur une plateforme au sol, tel qu'exposé dans la revendication 9 annexée.

De tels produit programme d'ordinateur, module de traitement et système de guidage présentent les mêmes avantages que ceux évoqués pour le procédé selon le premier aspect.

### PRESENTATION DES FIGURES

D'autres caractéristiques et avantages de la présente invention apparaîtront à la lecture de la description qui va suivre d'un mode de réalisation de l'invention. Cette description sera donnée en référence aux dessins annexés dans lesquels :
- la figure 1 illustre des zones de roulage telles que des zones de croisement peuvent présenter une topologie complexe;
- la figure 2 est un diagramme schématisant une mise en oeuvre d'un procédé de guidage selon l'invention ;
- la figure 3 représente un système de guidage selon un mode de réalisation de l'invention ;

### DESCRIPTION DETAILLEE

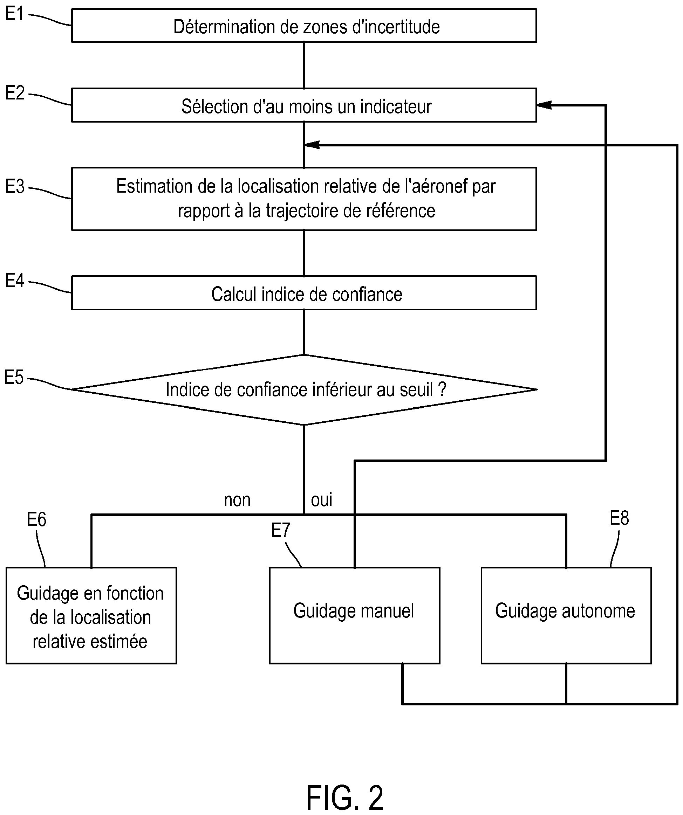

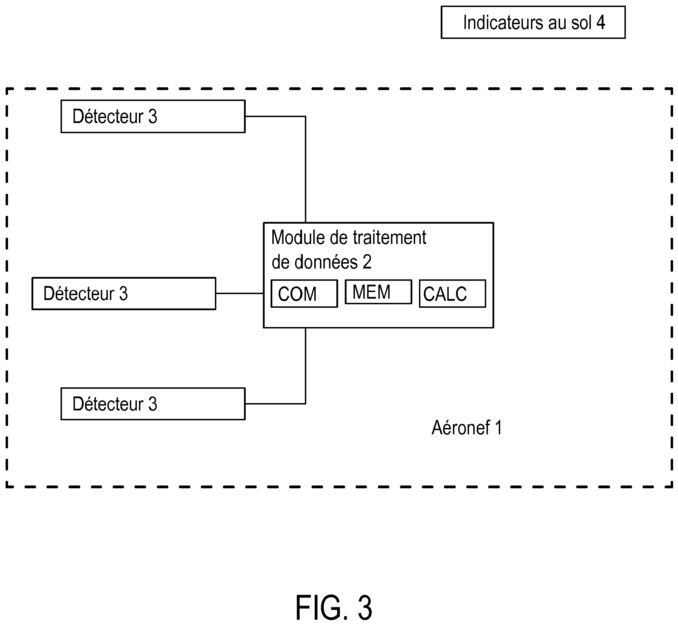

En référence à la **figure 2** un mode de mise en oeuvre de l'invention concerne un procédé de guidage d'un aéronef 1 le long d'une trajectoire de référence sur une plateforme mis en oeuvre par un module de traitement de données 2 d'un système de guidage d'un aéronef illustré en **figure 3****.**

Un tel système comprend des indicateurs au sol 4 utilisés pour le balisage des zones de roulage de la plateforme et au moins un détecteur 3 embarqué sur l'aéronef 1 et adapté pour détecter la position de tels indicateurs au sol. Un tel détecteur capte les signaux envoyés ou réfléchis par lesdits indicateurs au sol. Un tel détecteur peut par exemple être un capteur optique ou optoélectronique captant une lumière émise par des sources lumineuses telles que des lampes ou réfléchie par des marquages réfléchissants. Un tel détecteur peut également être un récepteur radiofréquence recevant des signaux radios émis par des antennes disposées au sol.

Lesdits détecteurs 3 peuvent être reliés au module de traitement 2 de façon à lui fournir des données de mesure permettant au module de traitement 2 de déterminer la localisation relative de l'aéronef 1 par rapport à ces indicateurs 4.

Le module de traitement de données 2 peut comporter des moyens de communication tels qu'une interface de communication COM, des moyens de calcul tels qu'un calculateur CALC et des moyens de stockage MEM. Un tel calculateur peut consister en un processeur ou microprocesseur, de type x-86 ou RISC par exemple, un contrôleur ou microcontrôleur, un DSP, un circuit intégré tel qu'un ASIC ou programmable tel qu'un FPGA, une combinaison de tels éléments ou tout autre combinaison de composants permettant de mettre en oeuvre les étapes de calcul du procédé décrit ci-dessous. Les moyens de stockage MEM peuvent consister en n'importe quel type de stockage de masse informatique tel qu'un disque dur magnétique à plateau, un disque SSD, de la mémoire flash ou encore un lecteur de CD-rom ou DVD-rom. Lesdits moyens de communication COM peuvent être utilisés pour communiquer avec les détecteurs 3. Lesdits moyens de stockage MEM peuvent notamment être utilisés pour stocker une ou plusieurs représentations cartographiques de la plateforme aéroportuaire sur laquelle l'aéronef 1 doit être guidé.

Le module de traitement de données 2 peut être relié à au moins un calculateur de l'aéronef ou être intégré dans celui-ci, de sorte à pouvoir lui transmettre des commandes de guidage de l'aéronef.

Le procédé selon l'invention propose un guidage amélioré de l'aéronef le long d'une trajectoire de référence permettant de limiter la probabilité d'erreurs de guidage lors d'un guidage dans une zone complexe comme une zone de croisement.

Lors de la mise en oeuvre d'un procédé de guidage, la localisation relative de l'aéronef par rapport à la trajectoire de référence est estimée à partir de données concernant des indicateurs au sol transmises par les détecteurs, telles que la position des indicateurs par rapport à l'avion. Cette estimation de la localisation de l'aéronef est utilisée afin de procéder au guidage de l'aéronef le long de cette trajectoire de référence. Le procédé selon l'invention propose de vérifier que les indicateurs au sol pris en compte pour déterminer la localisation relative de l'aéronef sont pertinents par rapport à la trajectoire de référence à suivre. Ainsi, si un aéronef se trouve à un croisement entre une piste rectiligne et une piste en courbe et que la trajectoire à suivre par l'aéronef doit le mener le long de la piste rectiligne, le procédé selon l'invention permet d'éviter que les indicateurs situés le long de la piste en courbe soient pris en compte pour réaliser le guidage de l'aéronef. Un tel guidage pourrait alors faire emprunter à l'aéronef la piste en courbe au lieu de la piste rectiligne et risquerait de placer l'aéronef dans une situation dangereuse.

Pour cela, le procédé calcule pour une localisation relative estimée à partir de certains indicateurs au sol un indice de confiance. Un tel indice de confiance représente la probabilité que ces indicateurs au sol soient appropriés pour le guidage de l'aéronef étant donné la trajectoire empruntée par celui-ci.

Plus précisément, en référence à la **figure 2****,** lors d'une étape de détermination E1, le module de traitement de données détermine une ou plusieurs zones d'incertitude de la plateforme complexes géométriquement à partir d'une cartographie de la plateforme. Une telle étape de détermination peut être mise en oeuvre au début d'une phase de roulage. Alternativement, une telle étape de détermination peut être mise en oeuvre de manière répétée dans le temps au cours d'une phase de roulage.

Lors d'une étape de sélection E2, le module de traitement sélectionne parmi la pluralité d'indicateurs au sol détectés par les détecteurs de l'aéronef au moins un indicateur. Une telle étape de sélection est mise en oeuvre lorsque l'aéronef se trouve dans ou à proximité d'une zone d'incertitude déterminée lors de l'étape de détermination E1. Ces indicateurs sélectionnés sont ceux que le module de traitement va ensuite tenter d'utiliser pour procéder au guidage de l'aéronef.

Lors d'une étape d'estimation de localisation relative E3, le module de traitement 2 estime la localisation relative de l'aéronef par rapport à la trajectoire de référence à partir de données relatives aux indicateurs sélectionnés lors de l'étape de sélection E2 transmises par les détecteurs. Cette estimation peut par exemple faire intervenir la position de l'aéronef par rapport à un indicateur ou à un couple d'indicateurs.

Lors d'une étape de calcul E4, le module de traitement 2 vérifie la pertinence des indicateurs sélectionnés utilisés lors de l'étape d'estimation de localisation relative E3 par rapport à la trajectoire de référence à suivre. Pour cela le module de traitement calcule pour la localisation relative estimée à partir de ces indicateurs sélectionnés un indice de confiance indiquant la probabilité que ces indicateurs sélectionnés marquent un chemin que l'aéronef est sensé emprunter en suivant la trajectoire de référence.

Selon un premier mode de réalisation, le calcul de l'indice de confiance est réalisé en fonction de la disposition des indicateurs sélectionnés par rapport à la trajectoire de référence. Par exemple, des indicateurs peuvent être considérés comme adaptés s'ils sont disposés le long d'une trajectoire similaire à la trajectoire de référence. L'indice de confiance associé à ces indicateurs pourra alors être élevé. A l'inverse, si des indicateurs sélectionnés forment une ligne courbe indiquant un virage alors que la trajectoire de référence est une ligne droite, les indicateurs peuvent être considérés comme inadaptés et l'indice de confiance associé peut alors être faible.

Selon un deuxième mode de réalisation, le calcul de l'indice de confiance est réalisé en fonction de la position de l'aéronef par rapport aux indicateurs sélectionnés et de la trajectoire de référence. Le module de traitement peut par exemple comparer la position de l'aéronef par rapport aux indicateurs sélectionnés et la localisation de l'aéronef par rapport à la trajectoire de référence. Si les indicateurs sélectionnés sont inadaptés et ne suivent pas la trajectoire de référence, l'aéronef suivant la trajectoire de référence va s'écarter des indicateurs sélectionnés mais pas de la trajectoire de référence. L'écart entre la position relative de l'aéronef par rapport aux indicateurs sélectionnés et la localisation relative de l'aéronef par rapport à la trajectoire de référence peut alors présenter une variation brusque. L'indice de confiance associé à de tels indicateurs inadaptés pourra alors être faible.

Le calcul de l'indice de confiance peut être fonction d'un niveau de complexité géométrique de la zone d'incertitude traversée par l'aéronef ou de conditions extérieures comme des conditions météorologiques. L'indice de confiance peut être fixé à une valeur prédéterminée volontairement très basse lorsque sont remplies des conditions dans lesquelles le calcul de l'indice de confiance est connu pour donner des résultats non fiables.

Lors d'une étape de comparaison E5, le module de traitement compare l'indice de confiance calculé à un seuil prédéterminé.

Lors d'une étape de guidage E6, le module de traitement guide l'aéronef le long de la trajectoire de référence en fonction de la localisation relative estimée si l'indice de confiance est supérieur au seuil prédéterminé. La localisation relative ayant été reconnue comme digne de confiance, le module de traitement peut l'utiliser pour corriger la trajectoire de l'avion pour que celui-ci suive bien la trajectoire de référence.

Si l'indice de confiance est inférieur au seuil, la position relative estimée ne peut pas être utilisée pour le guidage de l'avion et le module de traitement exécute à nouveau les étapes de sélection E2, d'estimation de localisation relative E3, de calcul E4 et de comparaison E5 : le module de traitement sélectionne au moins un nouvel indicateur, estime la localisation relative de l'aéronef à partir des nouveaux indicateurs, calcule l'indice de confiance associé et le compare au seuil prédéterminé.

Le module de traitement peut ainsi répéter ces étapes tant que l'indice de confiance reste inférieur au seuil.

Selon un mode de réalisation, le module de traitement peut, lorsqu'un indice de confiance est inférieur au seuil, transmettre un message d'alarme au pilote requérant que l'aéronef soit piloté en mode manuel ou prévenant du passage de l'aéronef en mode manuel lors d'une étape E7 de guidage manuel. Un tel message peut par exemple être envoyé au bout d'un nombre prédéterminé de comparaisons négatives, au bout d'un certain temps écoulé sans qu'un indice de confiance soit supérieur au seuil ou encore lorsqu'il n'existe plus de nouvel indicateur pour lequel aucun indice de confiance n'a été calculé. Le module de traitement considère alors que les indicateurs sélectionnés au cours des étapes précédentes ne permettent pas un guidage fiable de l'aéronef et que le pilote devrait assurer un guidage manuel de l'aéronef. Le passage en mode manuel peut être automatique à l'issue de l'émission du message d'alarme, par exemple après expiration d'un décompte temporel de durée prédéterminée. Dans un tel mode de réalisation l'envoi d'un tel message requérant le guidage manuel de l'aéronef ou le passage automatique en mode manuel accompagné d'une alerte peut être imposé en fixant systématiquement lors de l'étape de calcul E4 l'indice de confiance à une valeur prédéterminée volontairement très basse jusqu'à ce que le message d'alarme soit envoyé.

De plus, lorsqu'un indice de confiance est inférieur au seuil prédéterminé, le module de traitement peut décider de guider l'aéronef à partir de la trajectoire de référence lors d'une étape E8 de guidage autonome, sans prendre en compte la ou les localisations relatives estimées puisque ces localisations relatives n'ont pas été jugées fiables. Le module de traitement peut également prendre en compte des informations de localisation absolue fournies par exemple par un module GPS. L'aéronef continue alors à être guidé mais en aveugle, sans utiliser les informations issues des détecteurs.

Selon un mode de réalisation, si l'aéronef est piloté en mode manuel et se trouve dans une zone d'incertitude, le module de traitement peut tout de même exécuter les étapes de sélection E2, d'estimation d'une localisation relative E3, de calcul E4 et de comparaison E5 et peut proposer au pilote de repasser en mode de guidage automatique lorsqu'un indice de confiance est supérieur au seuil prédéterminé. Le module de traitement dispose alors d'une localisation relative considérée comme fiable lui permettant de réaliser le guidage automatique de l'aéronef dans la zone d'incertitude le long de la trajectoire de référence. Le mode de guidage automatique peut également être réenclenché automatiquement lorsqu'un indice de confiance est supérieur au seuil prédéterminé.

Le procédé de guidage tel que décrit permet ainsi de guider correctement un aéronef sur une plate-forme d'un aéroport, même dans des zones de roulage complexes.

## Revendications

1. Procédé de guidage le long d'une trajectoire de référence sur une plateforme au sol d'un aéronef (1) embarquant au moins un détecteur (3) adapté pour détecter la position d'une pluralité d'indicateurs balisant des zones de roulage au sol (4),
ledit procédé comprenant les étapes suivantes mises en oeuvre par un module de traitement de données (2) susceptible d'être connecté audit au moins un détecteur :
a) détermination (E1) de zones d'incertitude de la plateforme complexes géométriquement à partir d'une cartographie de la plateforme,
b) à proximité d'une desdites zones d'incertitude déterminées, sélection (E2) de plusieurs indicateurs (4) parmi la pluralité d'indicateurs au sol détectés par ledit au moins un détecteur,
c) estimation (E3) d'une localisation relative de l'aéronef par rapport à ladite trajectoire de référence à partir de données relatives aux indicateurs sélectionnés transmises par ledit au moins un détecteur,
d) calcul (E4) d'un indice de confiance représentant la probabilité que ces indicateurs au sol soient appropriés pour le guidage de l'aéronef sur la trajectoire de référence,
e) comparaison (E5) de l'indice de confiance calculé à un seuil prédéterminé,
f) lorsque l'indice de confiance calculé est supérieur au seuil prédéterminé, guidage (E6) automatique de l'aéronef par le module de traitement le long de la trajectoire de référence en fonction de la localisation relative estimée ; et
lorsque l'indice de confiance calculé est inférieur au seuil prédéterminé, exécuter à nouveau les étapes b) à e),
puis le procédé comprend :
- au bout d'un temps prédéterminé écoulé sans que l'indice de confiance calculé soit supérieur au seuil prédéterminé, ou
- au bout d'un nombre prédéterminé d'exécutions des étapes b) à e) durant lesquelles l'indice de confiance est inférieur au seuil prédéterminé, ou
- lorsqu'il n'existe plus d'indicateur parmi la pluralité d'indicateurs au sol pour lequel aucun indice de confiance n'a été calculé,
- une transmission par le module de traitement d'un message d'alarme à un pilote requérant que l'aéronef soit piloté en mode manuel ou prévenant d'un passage en mode manuel lors d'une étape (E7) de guidage manuel.

2. Procédé selon la revendication 1, dans lequel l'étape de calcul de l'indice de confiance des indicateurs sélectionnés (E4) est réalisée en fonction de la disposition desdits indicateurs au sol par rapport à la trajectoire de référence.

3. Procédé selon la revendication 1, dans lequel l'indice de confiance est calculé à l'étape d) en fonction de la position de l'aéronef par rapport aux indicateurs sélectionnés et de la trajectoire de référence.

4. Procédé selon l'une des revendications précédentes, dans lequel lorsque l'indice de confiance relatif à la localisation estimée est inférieur au seuil prédéterminé, le module de traitement de données guide l'aéronef à partir de la trajectoire de référence (E8).

5. Procédé selon l'une des revendications précédentes, dans lequel le module de traitement met en oeuvre l'étape de détermination des zones d'incertitude (E1) de manière répétée dans le temps.

6. Procédé selon l'une des revendications précédentes, dans lequel le module de traitement met en oeuvre l'étape de détermination des zones d'incertitude (E1) lorsque l'aéronef entre en phase de roulage (« taxiing »).

7. Produit programme d'ordinateur comprenant des instructions de code pour l'exécution d'un procédé de guidage selon l'une quelconque des revendications précédentes lorsque ce programme est exécuté par un processeur.

8. Module de traitement de données (2) étant susceptible d'être connecté à au moins un détecteur (3) adapté pour détecter la position d'une pluralité d'indicateurs (4) localisés sur une plateforme au sol et balisant des zones de roulage, ledit détecteur (3) étant embarqué sur un aéronef (1) et ledit module de traitement de données (2) étant configuré pour mettre en oeuvre le procédé selon l'une quelconque des revendications 1 à 6.

9. Système de guidage d'un aéronef (1) le long d'une trajectoire de référence sur une plateforme au sol comprenant : au moins un détecteur (3), une pluralité d'indicateurs au sol (4) et un module de traitement de données (2) selon la revendication 8.

## Patentansprüche

1. Verfahren zur Führung eines Luftfahrzeugs (1), das mindestens einen eingebauten Detektor (3) aufweist, der dazu angepasst ist, die Position einer Vielzahl von Anzeigern zu detektieren, die Bodenrollstreckenzonen (4) kennzeichnen, entlang eines Bezugswegs auf einer Plattform am Boden,
wobei das Verfahren die folgenden Schritte umfasst, die durch ein Datenverarbeitungsmodul (2) durchgeführt werden, das mit dem mindestens einen Detektor verbunden werden kann:
a) Bestimmen (E1) von Unsicherheitszonen der Plattform, die geometrisch komplex sind, ausgehend von einer Kartografie der Plattform,
b) in der Nähe einer der bestimmten Unsicherheitszonen, Auswählen (E2) mehrerer Anzeiger (4) unter der Vielzahl von Anzeigern am Boden, die durch den mindestens einen Detektor detektiert werden,
c) Schätzen (E3) einer relativen Ortsbestimmung des Luftfahrzeugs in Bezug auf den Bezugsweg ausgehend von Daten, welche die, durch den mindestens einen Detektor gesendeten ausgewählten Anzeiger betreffen,
d) Berechnen (E4) eines Vertrauensindex, der die Wahrscheinlichkeit darstellt, dass diese Anzeiger am Boden zur Führung des Luftfahrzeugs auf dem Bezugsweg geeignet sind,
e) Vergleichen (E5) des berechneten Vertrauensindex mit einem vorbestimmten Schwellenwert,
f) wenn der berechnete Vertrauensindex höher ist als der vorbestimmte Schwellenwert, automatisches Führen (E6) des Luftfahrzeugs durch das Verarbeitungsmodul entlang des Bezugswegs in Abhängigkeit von der geschätzten relativen Ortsbestimmung; und
wenn der berechnete Vertrauensindex niedriger ist als der vorbestimmte Schwellenwert, erneutes Ausführen der Schritte b) bis e),
wobei das Verfahren ferner Folgendes umfasst:
- am Ende einer vorbestimmten Zeit, die verstrichen ist, ohne dass der berechnete Vertrauensindex höher ist als der vorbestimmte Schwellenwert, oder
- am Ende einer vorbestimmten Anzahl von Ausführungen der Schritte b) bis e), während denen der Vertrauensindex niedriger ist als der vorbestimmte Schwellenwert, oder
- wenn kein Anzeiger unter der Vielzahl von Anzeigern am Boden, für den kein Vertrauensindex berechnet wurde, mehr vorhanden ist,
- ein Senden einer Alarmnachricht, die anfordert, dass das Luftfahrzeug im manuellen Modus gelenkt wird, oder bei einem Schritt (E7) des manuellen Führens vor einem Übergang zum manuellen Modus warnt, durch das Verarbeitungsmodul an einen Piloten.

2. Verfahren nach Anspruch 1, wobei der Schritt des Berechnens des Vertrauensindex der ausgewählten Anzeiger (E4) in Abhängigkeit von der Anordnung der Anzeiger am Boden in Bezug auf den Bezugsweg ausgeführt wird.

3. Verfahren nach Anspruch 1, wobei der Vertrauensindex im Schritt d) in Abhängigkeit von der Position des Luftfahrzeugs in Bezug auf die ausgewählten Anzeiger und dem Bezugsweg berechnet wird.

4. Verfahren nach einem der vorhergehenden Ansprüche, wobei, wenn der Vertrauensindex, der die geschätzte Ortsbestimmung betrifft, niedriger ist als der vorbestimmte Schwellenwert, das Datenverarbeitungsmodul das Luftfahrzeug ausgehend von dem Bezugsweg führt (E8).

5. Verfahren nach einem der vorhergehenden Ansprüche, wobei das Verarbeitungsmodul den Schritt des Bestimmens der Unsicherheitszonen (E1) auf zeitlich wiederholte Weise durchführt.

6. Verfahren nach einem der vorhergehenden Ansprüche, wobei das Verarbeitungsmodul den Schritt des Bestimmens der Unsicherheitszonen (E1) durchführt, wenn das Flugzeug in die Rollphase ("Taxiing") eintritt.

7. Computerprogrammprodukt, das Codeanweisungen für die Ausführung eines Führungsverfahrens nach einem der vorhergehenden Ansprüche, wenn das Programm durch einen Prozessor ausgeführt wird, umfasst.

8. Datenverarbeitungsmodul (2), das mit mindestens einem Detektor (3) verbunden werden kann, der dazu angepasst ist, die Position einer Vielzahl von Anzeigern (4) zu detektieren, die sich auf einer Plattform am Boden befinden und Rollstreckenzonen kennzeichnen, wobei der Detektor (3) in einem Luftfahrzeug (1) eingebaut ist und das Datenverarbeitungsmodul (2) dazu ausgestaltet ist, das Verfahren nach einem der Ansprüche 1 bis 6 durchzuführen.

9. System zur Führung eines Luftfahrzeugs (1) entlang eines Bezugswegs auf einer Plattform am Boden, das Folgendes umfasst: mindestens einen Detektor (3), eine Vielzahl von Anzeigern am Boden (4) und ein Datenverarbeitungsmodul (2) nach Anspruch 8.

## Claims

1. A method of guiding along a reference trajectory on a ground platform an aircraft (1) carrying at least one detector (3) adapted to detect the position of a plurality of indicators marking taxiing areas (4),
said method comprising the following steps implemented by a data processing module (2) capable of being connected to said at least one detector:
(a) determining (E1) geometrically complex uncertainty zones of the platform from a mapping of the platform,
b) in the vicinity of one of said determined uncertainty zones, selecting (E2) of several indicators (4) from the plurality of ground indicators detected by said at least one detector,
c) estimating (E3) a relative location of the aircraft with respect to said reference trajectory from data relating to the selected indicators transmitted by said at least one detector,
d) calculating (E4) a confidence index representing the probability that these ground indicators are appropriate for guiding the aircraft on the reference trajectory,
e) comparing (E5) the calculated confidence index to a predetermined threshold,
f) when the calculated confidence index is greater than the predetermined threshold, automatic guidance (E6) of the aircraft by the processing module along the reference trajectory according to the estimated relative location, and
when the calculated confidence index is less than the predetermined threshold, perform steps b) through e) again,
then the method comprises:
- after a predetermined time has elapsed without the calculated confidence index being greater than the predetermined threshold, or
- after a predetermined number of executions of steps b) through e) during which the confidence index is below the predetermined threshold, or
- when there is no longer an indicator among the plurality of ground indicators for which no confidence index has been calculated,
- transmission by the processing module of an alarm message to a pilot requesting that the aircraft be driven in manual mode or warning of a switch to manual mode during a manual guidance step (E7).

2. Method according to claim 1, in which the step of calculating the confidence index of the selected indicators (E4) is performed as a function of the arrangement of said ground indicators with respect to the reference trajectory.

3. The method according to claim 1, wherein the confidence index is calculated at step d) as a function of the position of the aircraft relative to the selected indicators and the reference trajectory.

4. The method according to any of the preceding claims, wherein when the confidence index relating to the estimated location is below the predetermined threshold, the data processing module guides the aircraft from the reference trajectory (E8).

5. The method according to any of the preceding claims, wherein the processing module implements the step of determining the uncertainty zones (E1) repeatedly over time.

6. Method according to one of the preceding claims, in which the processing module implements the step of determining the uncertainty zones (E1) when the aircraft enters a taxiing phase.

7. A computer program product comprising code instructions for executing a guidance method according to any of the preceding claims when said program is executed by a processor.

8. Data processing module (2) being able to be connected to at least one detector (3) adapted to detect the position of a plurality of indicators (4) located on a ground platform and marking out taxiing zones, said detector (3) being embarked on an aircraft (1) and said data processing module (2) being configured to implement the method according to any one claims 1 to 6.

9. A system for guiding an aircraft (1) along a reference trajectory on a ground platform comprising: at least one detector (3), a plurality of ground indicators (4) and a data processing module (2) according to claim 8.
